# EUROPEAN PATENT SPECIFICATION

(11) **EP 3 929 915 B1**
(45) Date of publication and mention of the grant of the patent: **20.08.2025**
(21) Application number: 21203849.1
(22) Date of filing: 21.10.2021
(51) Int. Cl.: G10L 13/047, G10L 13/06, B60W 50/14, G06F 3/16

(54) **VOICE INTERACTION METHOD, SERVER, VOICE INTERACTION SYSTEM AND STORAGE MEDIUM**
SPRACH-INTERAKTIONSVERFAHREN, -SERVER, SPRACH-INTERAKTIONSSYSTEM UND -SPEICHERMEDIUM
MÉTHODE D'INTERACTION VOCALE, SERVEUR, SYSTÈME D'INTERACTION VOCALE ET SUPPORT DE STOCKAGE

(30) Priority: 22.06.2021 CN 202110689953
(43) Date of publication of application: 29.12.2021
(73) Proprietor: Guangzhou Xiaopeng Motors Technology Co., Ltd., Guangzhou, Guangdong 510000 (CN)
(72) Inventor: GUO, Huapeng, Guangzhou (CN); ZHANG, Yan, Guangzhou (CN)
(74) Representative: Ran, Handong

(56) References cited:
- WO-A1-2020/072759
- CN-A- 111 243 570
- KR-A- 20200 050 104
- US-A1- 2015 073 805

## Description

### Field of Invention

The present invention relates to voice technology, and in particular, to a voice interaction method, server, voice interaction system and storage medium.

### Background

Vehicle terminals have quite different commonly used response commands as user's driving habits vary. A single cache may be at risk of failure or loss. In case of a cache failure or loss, a third party service may be requested, which can result in heavy traffic or high audio playback latency, affecting the human-machine interaction experience. Moreover, frequent use of third party services may result in increased costs. Documents CN111243570A, WO 2020/072759 A1, US 2015/073805 A1 and KR 2020 0050104 A disclose text to speech systems.

### Summary of Invention

A voice interaction method, server, voice interaction system and storage medium are provided in accordance with embodiments of the present invention.

The invention is defined by the appendend claims.

In the voice interaction method, the server, the voice interaction system and the computer-readable storage medium defined in the appendend claims, a search is conducted first in the first cache and the second cache of the server that are able to respond faster, so as to obtain a target audio file more quickly. When neither the first cache nor the second cache contains the target audio file, the target audio file is synthesized online using the third party service. This reduces the use of third party services, and also avoids the failure to obtain the target audio file due to the fact that the target audio file is not present in the first cache and the second cache. The present invention achieves a balance between low cost and fast audio playback, thereby bringing a smoother playback experience to users.

Additional aspects and advantages of the present invention will be set forth in the description below, and will become apparent from the description, or can be understood by practice of the present invention.

### Brief Description of Drawings

The above and/or additional aspects and advantages of the present invention will become apparent and readily understood from the following description of the embodiments in connection with the accompanying drawings, in which:
FIG. 1 is a flow chart of a voice interaction method according to an embodiment of the present invention;
FIG. 2 is a block diagram of a voice interaction system according to an embodiment of the present invention;
FIG. 3 is another flow chart of a voice interaction method according to an embodiment of the present invention;
FIG. 4 is yet another flow chart of a voice interaction method according to an embodiment of the present invention;
FIG. 5 is a schematic diagram of an application scenario of a voice interaction method according to an embodiment of the present invention;
FIG. 6 is a block diagram of a server according to an embodiment of the present invention;
FIG. 7 is another block diagram of a voice interaction system according to an embodiment of the present invention.

### Detailed Description

The embodiments of the present invention will be described in detail below, examples of which are illustrated in the accompanying drawings, in which like or similar numerals denote like or similar elements or elements having like or similar functions throughout. The embodiments described below with reference to the drawings are illustrative only and are not to be construed as limiting the present invention.

In the description of the embodiments of the present invention, the terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of" or "multiple" means two or more.

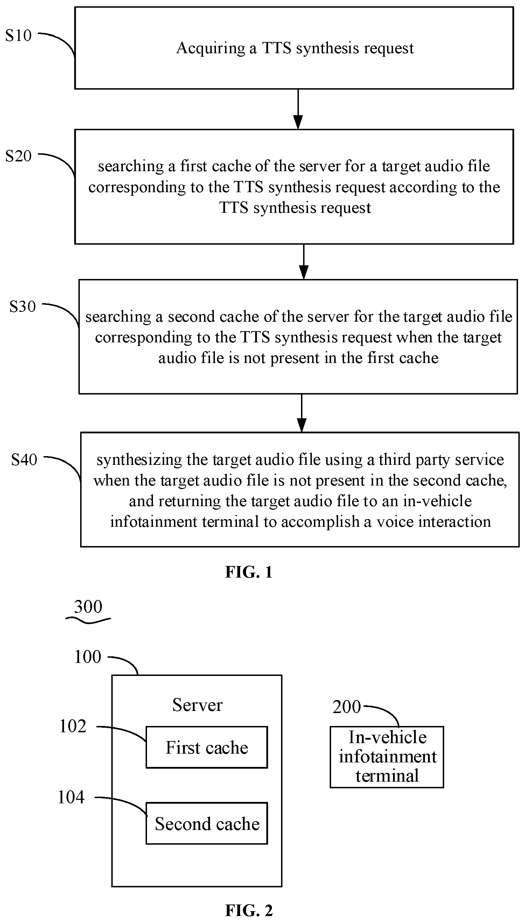

Referring to FIG. 1 and FIG. 2, an embodiment of the present invention provides a voice interaction method, which includes:
step S10, acquiring a TTS synthesis request;
step S20, based on the TTS synthesis request, searching a first cache 102 of the server 100 for a target audio file corresponding to the TTS synthesis request;
step S30, searching a second cache 104 of the server 100 for the target audio file corresponding to the TTS synthesis request when the target audio file is not present in the first cache 102; and
step S40, synthesizing the target audio file using a third party service when the target audio file is not present in the second cache 104, and returning the target audio file to a vehicle terminal to accomplish voice interaction.

In the voice interaction method, a search is conducted first in the first cache 102 and the second cache 104 of the server 100 that are able to respond faster, so as to obtain a corresponding target audio file more quickly. When neither the first cache 102 nor the second cache 104 contains the target audio file, the target audio file is synthesized online using the third party service. This reduces the use of third party services, and also avoids the failure to obtain the target audio file due to the fact that the target audio file is not present in the first cache 102 and the second cache 104. The present invention achieves a balance between low cost and fast audio playback, thereby bringing a smoother playback experience to users.

In particular, at step S10, the TTS synthesis request may be from a vehicle terminal 200 in communication with the server 100, or may be from a mobile terminal in communication with the server 100. The mobile terminal include, but are not limited to, a cell phone, tablet computer, wearable smart device, laptop computer, or the like. The vehicle terminal 200 and the mobile terminal may be in wired or wireless connection with the server 100 for data and signal transmission. The wireless connection include, but not limited to, WIFI, a mobile communication network, etc. The mobile communication network may include mobile communication means, such as 4G, 5G, or 6G.

In some embodiments, the TTS synthesis request may be a voice command "open the window". The step S20 may include following acts. The TTS synthesis request with "open window" is subject to natural language recognition to recognize the content of the voice command of "open window". Response text data that reads "Okay, it has been opened for you" is obtained in TTS (Text To Speech) fashion based on the result of the natural language recognition. A search is conducted in the first cache 102 of the server 100 based on the response text data "Okay, it has been opened for you" for the target audio file corresponding to the response text data "Okay, it has been opened for you". The target audio file will be sent to the vehicle terminal for playback thereon.

In some embodiments, the TTS synthesis request may be response text data that reads "Okay, it has been opened for you". The step S20 may include searching the first cache 102 of the server 100 based on the response text data "Okay, it has been opened for you" for the target audio file corresponding to the response text data "Okay, it has been opened for you". The target audio file will be sent to the vehicle terminal for playback thereon.

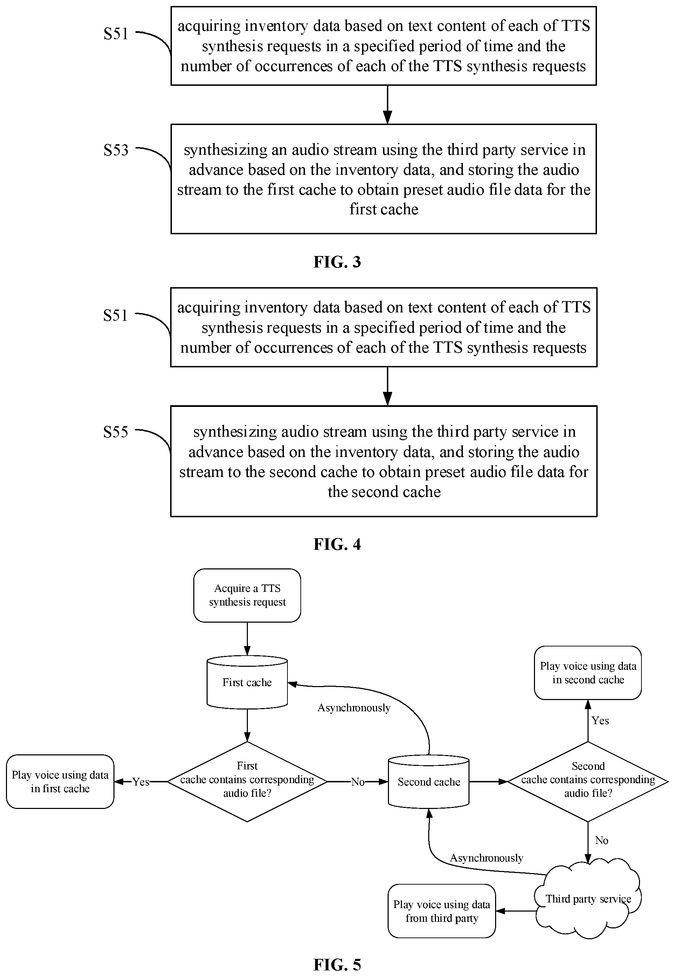

Referring to FIG. 3 and FIG. 4, in some embodiments, the voice interaction method comprises:
step S51, acquiring inventory data based on text content of each TTS synthesis request acquired in a specified period of time and the number of occurrences of each TTS synthesis request;
step S53, synthesizing an audio stream using the third party service in advance based on the inventory data, and storing the audio stream to the first cache 102 to obtain preset audio file data for the first cache 102, and/or
step S55, synthesizing audio stream using the third party service in advance based on the inventory data, and storing the audio stream to the second cache 104 to obtain preset audio file data for the second cache 104.

In this way, the preset audio file data for the first cache 102 and/or for the second cache 104 may be obtained based on the inventory data in the specified period of time. Setting the preset audio file data allows the first cache 102 and/or the second cache 104 to quickly accumulate stored audio file data, increasing cache hit rate.

Specifically, the inventory data may be the text content of each of the TTS synthesis requests acquired within the specified period of time and the number of occurrences of each of the TTS synthesis requests. The specified period of time may be 1 day, 2 days, 3 days, 4 days, 5 days, 6 days, 7 days, or 30 days. The specific period of time is not limited herein. The inventory data may be the text content of each of TTS synthesis requests acquired within a latest period of time and the number of occurrences of each of the TTS synthesis requests. The inventory data may also be the text content of each of TTS synthesis requests acquired within a previous period of time and the number of occurrences of each of the TTS synthesis requests. In some embodiments, for example, the specified period of time may be 7 days. The inventory data may include the text content of each of TTS synthesis requests in the last 7 days and the number of occurrences of each of the TTS synthesis requests. In some embodiments, for another example, the specified period of time may be 7 days randomly selected within the previous six months. The inventory data may include the text content of each of TTS synthesis requests in 7 days and the number of occurrences of each of the TTS synthesis requests.

It should be noted that the inventory data may be obtained by the server 100 of the embodiments based on the text content of each of TTS synthesis requests and the number of occurrences of each of the TTS synthesis requests, or may be obtained by the manufacturer through such as simulation or statistics according to users' habits, or may be obtained in other ways which will not be illustrated herein. In some embodiments, the inventory data is obtained by the server 100 in the embodiments according to TTS synthesis requests of a user, so that the first cache 102 and the second cache 104 are updated according to the habits of the user using the server 100. In some embodiments, the inventory data is obtained by the manufacturer through such as simulation or statistics according to users' habits, such that the first cache 102 and the second cache 104 are set with factory settings based on the inventory data before the server 100 is sold or traded.

It should be noted that the step S51, step S53 and step S55 may be repeated every specified time period. The specified time period may be, but not limited to, 7 days, 8 days, or 30 days. **In** this way, the stored data can be updated from the text content of each of TTS synthesis requests within a specified period of time and the number of occurrences of each of the TTS synthesis requests. The preset audio file data of the first cache 102 and/or the preset audio file data of the second cache 104 may also be updated based on the updated stored data. This allows for the preset audio file data of the first cache 102 and/or the preset audio file data of the second cache 104 to be as realistic as possible, to improve user experience.

**In** some embodiments, for example, the inventory data is obtained each day based on the text content of each of TTS synthesis requests within the last 7 days and the number of occurrences of each of the TTS synthesis requests, so that the preset audio file data of the first cache 102 and/or the preset audio file data of the second cache 104 are updated each day based on the newest inventory data.

In the embodiments, the first cache 102 is configured to store frequently used audio files, i.e., audio files used in high frequency. For example, in a case where the server 100 is used for vehicle interaction, the first cache 102 may be configured to store audio files of commonly used responses such as "OK", "I do not understand", "Would you say it in another way?", "The first route has been chosen for you", and the like.

In the embodiments, it may be that audio streams are pre-synthesized using a third party service based on the inventory data, and the audio streams are stored into the first cache 102 to obtain the preset audio file data of the first cache 102. It may also be that audio streams are pre-synthesized using a third party service based on the inventory data, and the audio streams are stored into the second cache 104 to obtain the preset audio file data of the second cache 104. It may further be that audio streams are pre-synthesized using a third party service based on the inventory data, and the audio streams are stored into the first cache 102 and the first cache 104.

It should be noted that the preset audio file data may include a plurality of audio streams. That is, a plurality of audio streams are respectively synthesized by the third party service, and every time an audio stream is synthesized, it will be stored into the second cache 104. In an embodiment, for example, the preset audio file data includes "It is warm today", and the audio streams include "today", "it" and "is warm". After the synthesis of the audio stream "today" is completed, the third party service synthesizes the audio stream "it" and then transmits the audio stream "it" to the second cache 104 for storage. In this way, the preset audio file data in the second cache 104 can quickly obtain some of the audio streams, so as to output the obtained audio streams timely. The principles described in connection with the second cache 104 can also applied to the first cache 102, and will not be repeated herein.

It should be noted that the preset audio file data includes a plurality of audio streams, and the plurality of audio streams constitute a plurality of target audio files corresponding to the text content of the TTS synthesis requests in the inventory data.

In some embodiments, the voice interaction method comprises:
step 61, storing the target audio file synthesized by the third party service online into the first cache 102 when the target audio file is not present in the first cache 102, and/or
step 63, storing the target audio file synthesized by the third party service online into the second cache 104 when the target audio file is not present in the second cache 104.

In this way, target audio files that are not in the first cache 102 and/or the second cache 104 may be backfilled to the first cache 102 and/or the second cache 104. When such a target audio file is required in a later time, it may be read directly locally from the server 100, so as to speed up the retrieval of the target audio file.

Specifically, in an embodiment, when a corresponding target audio file is not contained in the first cache 102, the corresponding target audio file will be synthesized online using a third party service based on the TTS synthesis request, and then will be transferred to the first cache 102.

For example, in a case where the server 100 is used for vehicle interaction, the backfilling can be performed in an asynchronous fashion. That is, there can be two processes, one of which may be referred to as the main process. In the main process, after the synthesis of the corresponding target audio file synthesized online by the third party service, the target audio file is transmitted to the vehicle terminal 200 for playback. In the other process, the server 100 obtains the corresponding target audio file from the third party service and stores it in the first cache 102. The two processes will not affect each other, and there are no specific restrictions on the timing or ordering between the two processes.

The backfilling for the second cache 104 is similar to the backfilling for the first cache 102 described above, and will not be repeated herein.

The absence of the target audio file in the first cache 102 and/or the second cache 104 of the server 100 includes the following. It may be that the target audio file is not present in the first cache 102, and at this point, the target audio file synthesized online using the third party service will be stored to the first cache 102. It may also be that the target audio file is not present in the second cache 104, and at this point, the target audio file synthesized online using the third party service will be stored to the second cache 104. It may further be that the target audio file is not present in neither the first cache 102 nor the second cache 104, and at this point, the target audio file synthesized online using the third party service will be stored to the first cache 102 and the second cache 104 of the server 100.

It should be noted that, when the first cache 102 does not contain the target audio file while the second cache 104 contains the target audio file, the target audio file found in the second cache 104 may also be stored to the first cache 102.

In an embodiment, the first cache 102 may be a high-performance cache (such as a high-performance cache container). Use of a high-performance cache container allows for a quick retrieval of a target audio file corresponding to a TTS synthesis request upon receipt of the TTS synthesis request. Moreover, the first cache 102 would employ cache eviction policies to provide high performance and control the cost at a certain level.

In some embodiments, the voice interaction method comprises:
controlling, by a switch, whether an audio file is to be stored into the first cache 102 and/or whether an audio file is to be stored into the second cache 104.

In this way, whether the first cache 102 and/or the second cache 104 stores audio files can be controlled based on factors such as the capacity and/or the update strategy of the first cache 102 and/or the second cache 104.

Specifically, a switch control module 106 is connected to the first cache 102 and the second cache 104. In some embodiments, when the audio files in the first cache 102 occupy eighty percent of the capacity of the first cache 102, the switch control module 106 controls the first cache 102 and/or the second cache 104 not to store additional audio files.

It should be noted that an audio file controlled by the switch whether to be stored into the first cache 102 and/or the second cache 104 may be an audio stream pre-synthesized using a third party service based on the inventory data, or may be a target audio file synthesized online by a third party when the target audio files is not present in the first cache 102 and/or the second cache 104, or may be an audio stream corresponding to a TTS synthesis request containing a preset keyword in the inventory data, which will not be limited herein.

The switch control module may also be configured to maintain an update policy for the first cache 102 and the second cache 104.

In the embodiments, it may be that the switch control module 106 is configured to control whether an audio file is to be stored into the first cache 102. It may be that the switch control module 106 is configured to control whether an audio file is to be stored into the second cache 104. It may also be that the switch control module 106 is configured to control whether an audio file is to be stored into the first cache and the second cache 104.

In some embodiments, the voice interaction method comprises:
step S71, searching for a TTS synthesis request containing a preset keyword in the inventory data, synthesizing using a third party service an audio stream corresponding to the TTS synthesis request, and storing the audio stream into the first cache 102 to update the preset audio file data in the first cache 102; and/or
step S73, searching for a TTS synthesis request containing a preset keyword in the inventory data, synthesizing using a third party service an audio stream corresponding to the TTS synthesis request, and storing the audio stream into the second cache 104 to update the preset audio file data in the second cache 104.

In this way, after the preset audio file data of the first cache 102 is obtained and/or the preset audio file data of the second cache 104 is obtained based on the inventory data, it is possible to further determine whether the inventory data contains a preset keyword(s), so as to timely update an audio file(s) corresponding to a TTS synthesis request(s) containing the preset keyword(s) in time.

In particular, an audio file corresponding to a TTS synthesis request may be updated in cases such as pronunciation change, tone adjustment, polyphonic word pronunciation modification, etc. Therefore, keywords are set in advance, such that the corresponding audio files can be updated timely through the preset audio file data of the first cache 102 and/or the preset audio file data of the second cache 104.

It should be noted that the preset keywords can be set timely based on questions and by such as the vehicle terminal 200, the mobile terminal, or the cloud, which are in communication with the server 100. The preset keywords can also be preset by the manufacturer based on statistics of common typographical errors or frequently interchangeable voices, before putting on the market. The preset keywords can be set in various ways, which will not be listed herein.

In the embodiments, it may be that the inventory data is searched for a TTS synthesis request containing a preset keyword, an audio stream corresponding to the TTS synthesis request is synthesized using a third party service, and is stored into the first cache 102 to update the preset audio file data of the first cache 102. It may also be that the inventory data is searched for a TTS synthesis request containing a preset keyword, an audio stream corresponding to the TTS synthesis request is synthesized using a third party service, and is stored into the second cache 104 to update the preset audio file data of the second cache 104. It may further be that the inventory data is searched for a TTS synthesis request containing a preset keyword, an audio stream corresponding to the TTS synthesis request is synthesized using a third party service and is stored into the first cache 102 and the second cache 104.

In some embodiments, the voice interaction method comprises:
step S65, executing a cache eviction policy when the first cache 102 meets a preset condition.

In this way, the first cache 102 can be enabled to dynamically store audio files.

In particular, the capacity of the first cache 102 is generally static. The first cache 102 stores audio files synthesized by a third-party service. If the capacity allocated to the first cache 102 has been used up, the audio files stored in the first cache 102 cannot be updated. Therefore, when the first cache 102 meets the preset condition, the cache eviction policy is executed, so that the first cache 102 can store the latest audio file(s).

There are various preset conditions. In some embodiments, for example, a cache eviction policy is executed when the first cache 102 has stored data for a specified time period. The specified time period may be 7 days. When the first cache 102 has stored data for 7 days, that is, on the eighth day, the cache eviction policy is executed to delete certain audio files. It will be appreciated that the specified time period may also be, for example, 3 days, 7 days, 10 days, which is not limited herein.

In some embodiments, for another example, the cache eviction policy is executed when the first cache 102 has stored audio files for a certain storage space. The certain storage space may be seventy percent of the storage space of the first cache 102. When the first cache 102 has stored data of seventy percent of its capacity, the cache eviction policy is executed to delete certain audio files. It will be appreciated that certain storage space may also be of other sizes, such as eighty percent, ninety percent of the storage space of the first cache 102, which is not limited herein.

The preset condition can also be set in connection with the processing speed of the first cache 102, whether different user accounts are logged in, or the like. The preset condition may include one condition or a combination of multiple conditions, which is not limited here.

**In** the embodiments, it may be that, when the first cache 102 has stored audio files for the specified time period, the cache eviction policy is executed. It may also be that, when the first cache 102 has stored audio files for the certain storage space, the cache eviction policy is executed. It may further be that, when the first cache 102 has stored audio files for the specified time period and the first cache 102 has stored audio files for the certain storage space, the cache eviction policy is executed.

In an embodiment, the second cache 104 may be a high reliability cache. The first cache 102 may fail or be abnormal. As a secondary solution for the first cache 102, a storage medium with higher reliability is used, which has a certain loss in performance but is relatively cheap in cost than the first cache 102. For a reliable storage medium, a cache eviction policy is not required.

Specifically, in some embodiments, the step S65 comprises:
step S651, executing the cache eviction policy on audio files based on the Least Recently Used principle and a preset expiration time.

In this way, the cache eviction policy on the first cache 102 can be more effective.

In particular, the cache eviction policy may include active eviction and passive eviction. Active eviction evicts audio files in the first cache 102 based on a preset expiration time. That is, audio files that have been stored in the first cache 102 for a time exceeding the preset expiration time are proactively deleted. For example, the preset expiration time may be 7 days. That is, audio files that have been stored in the first cache 102 for more than 7 days will be deleted. It can be understood that the preset expiration time may also be, for example, 3 days, 4 days, 10 days, which is not limited herein. Passive eviction evicts audio files in the first cache 102 based on the Least Recently Used principle. That is, the least recently used audio file or files in the first cache 102 are evicted. For example, the audio files in the first cache 102 are sorted by frequency of use within the last 7 days, and audio files with low frequency of use are deleted. It will be appreciated that the term "recently" in the algorithm may also be other time periods, such as the last 3 days, the last 1 day, etc., which is not limited herein.

The active eviction and the passive eviction may work together in various ways. For example, the cache eviction policy may be executed on the audio file on a daily basis according to an active eviction rule. When the first cache 102 has stored audio files for the certain storage space, the cache eviction policy is executed on the audio file according to a passive eviction rule. For another example, the cache eviction policy may be executed on the audio file on a daily basis according to a passive eviction rule. When the first cache 102 has stored audio files for the certain storage space, the cache eviction policy is executed on the audio file according to an active eviction rule. The ways of cooperation of the active eviction and the passive eviction will not be listed herein.

In some embodiments, the voice interaction method comprises:
step S75, updating the target audio file using the third party service when the target audio file corresponding to the TTS synthesis request is found in the second cache 104.

In this way, the target audio file is updated using the third party service based on the TTS synthesis request, so as to update the target audio file in the second cache 104 corresponding to the TTS synthesis request.

Specifically, in a case where the server 100 is used for vehicle interaction, the target audio file corresponding to the TTS synthesis request may be updated. While the target audio file corresponding to the TTS synthesis request is found in the second cache 104 and is sent to the vehicle terminal 200 timely, this target audio file may be updated using the third party service. In other words, the TTS synthesis request causes the second cache 104 to perform the update by obtaining the target audio file according to the TTS synthesis request. In this way, the second cache 104 can update target audio files with a high frequency of use timely, improving the user experience.

FIG. 5 is a diagram illustrating a scenario of a voice interaction method according to an embodiment of the present invention. **In** FIG. 5, a TTS synthesis request is acquired.

The first cache 102 is searched based on the TTS synthesis request and a corresponding target audio file is found for playback, and the method ends.

When the first cache 102 misses (namely, the corresponding target audio file is not found therein), the second cache 104 is searched, and the corresponding target audio file is found for playback.

When the first cache 102 misses and the second cache 104 hits, the corresponding target audio file found in the second cache 104 is backfilled to the first cache 102 asynchronously.

When the second cache 104 misses, the target audio file is synthesized online using a third party service for playback.

When the second cache 104 misses, the target audio file synthesized online using the third party service is backfilled to the second cache 104 asynchronously.

The method ends upon completion of the above processing. The embodiment of the invention obtains the corresponding target audio file more quickly by first searching the first cache 102 and the second cache 104 of the server 100 that are able to respond faster, and thus achieves a balance between low cost and fast audio playback, thereby bringing a smoother playback experience to users.

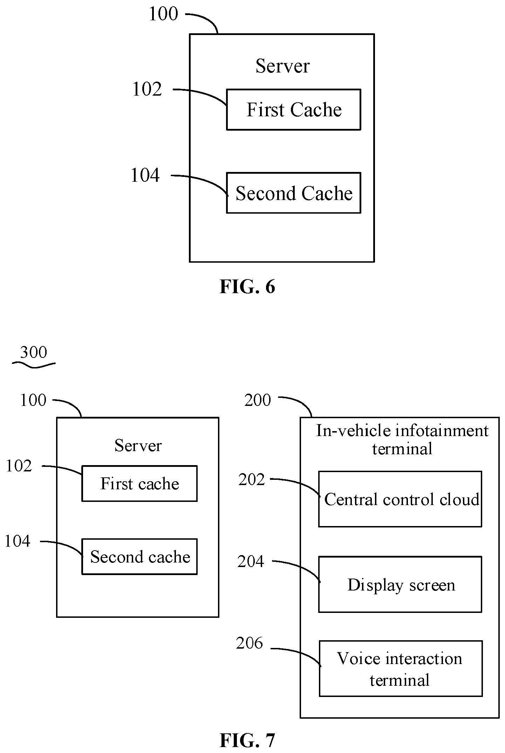

Referring to FIG. 6, a server 100 in accordance with an embodiment of the present invention comprises a first cache 102 and a second cache 104. The server 100 is configured to:
acquire a TTS synthesis request;
search the first cache 102 for a target audio file corresponding to the TTS synthesis request based on the TTS synthesis request;
search the second cache 104 for the target audio file corresponding to the TTS synthesis request when the target audio file is not present in the first cache 104; and
synthesize the target audio file using a third party service when the target audio file is not present in the second cache 104, and return the target audio file to a vehicle terminal to accomplish voice interaction.

The server 100 first searches locally the first cache 102 and the second cache 104 of the server 100 that are able to respond faster, so as to obtain a corresponding target audio file more quickly. When neither the first cache 102 nor the second cache 104 contains the target audio file, the server 100 uses the third party service to synthesize the target audio file online. This reduces the use of third party services, and also avoids the failure to obtain the target audio file due to the fact that the target audio file is not present in the first cache 102 and the second cache 104. The present invention achieves a balance between low cost and fast audio playback, thereby bringing a smoother playback experience to users.

Referring to FIG. 2, a system in accordance with an embodiment of the present invention includes a vehicle terminal 200 and a server 100.

The vehicle terminal 200 is configured to acquire a TTS synthesis request, and transmit the TTS synthesis request to the server 100.

The server 100 is configured to acquire a TTS synthesis request, search the first cache 102 for a target audio file corresponding to the TTS synthesis request based on the TTS synthesis request, search the second cache 104 for the target audio file corresponding to the TTS synthesis request when the target audio file is not present in the first cache 102, and synthesize the target audio file using a third party service when the target audio file is not present in the second cache 104, and return the target audio file to the vehicle terminal to accomplish voice interaction.

The voice interaction system 300 first searches locally the first cache 102 and the second cache 104 of the server 100 that are able to respond faster, so as to obtain a corresponding target audio file more quickly. When neither the first cache 102 nor the second cache 104 contains the target audio file, the server 100 uses the third party service to synthesize the target audio file online. This reduces the use of third party services, and also avoids the failure to obtain the target audio file due to the fact that the target audio file is not present in the first cache 102 and the second cache 104. The present invention achieves a balance between low cost and fast audio playback, thereby bringing a smoother playback experience to users.

Specifically, the vehicle terminal 200 may be installed on a vehicle. The vehicle includes, but not limited to, a fuel vehicle, extended-range electric vehicle, electric vehicle, hybrid vehicle, hydrogen energy vehicle, and the like.

Referring to FIG. 7, in an embodiment, the vehicle terminal 200 may comprise a central control cloud 202, a display screen 204, and a voice interaction terminal 206.

The central control cloud 202 is configured to perform natural language understanding processing on a voice command from a user to obtain a corresponding operation instruction and response text data. The central control cloud 202 also stores audio files corresponding to response text data. When the central control cloud 202 finds an audio file corresponding to the response text data therein, it may directly send the audio file to the voice interaction terminal 206 for playback. When the central control cloud 202 does not find an audio file corresponding to the response text data, it sends a TTS synthesis request to the server 100. In order to obtain an audio file with better sound quality and better emotion, the central control cloud 202 may also directly send a TTS synthesis request to a third party service for online synthesis.

The display screen 204 is configured to display a graphical user interface, such as a control panel interface, a navigation interface, a music interface. The display screen 204 may be a touch display screen 204. In addition to displaying a graphical user interface associated with the vehicle terminal 200, the display screen 204 also provides means for user input. A user inputs a command by touching an associated key on the touch display screen 204 or by inputting an associated gesture. In an embodiment, the display screen 204 may include at least one of a central control display screen 204, an instrument display screen 204, and a passenger seat display screen 204, and an entertainment screen on the back of the driver seat and the passenger seat. The user may input a relevant command through a key on the vehicle or through a voice, to have the desired graphical user interface to be displayed.

The voice interaction terminal 206 is configured to collect user voice requests and play audio files. For example, the voice interaction terminal 206 may have a microphone and a speaker. The voice interaction terminal 206 collects a user's voice request through the microphone and transmits it to the central control cloud 202. The central control cloud 202 performs natural language understanding processing on the voice request to obtain a corresponding operation instruction and text data. The central control cloud 202 sends the operation instruction and the text data to the voice interaction terminal 206, such that the voice interaction terminal 206 controls the vehicle to perform a corresponding operation(s).

In accordance with an embodiment of the present invention, a computer-readable storage medium is provided, which has stored thereon a computer program that, when executed by a processor, implements any of the embodiments of the voice interaction method.

Specifically, in an embodiment, the computer program, when executed by the processor, implements the voice interaction method comprising:
step S10, acquiring a TTS synthesis request;
step S20, based on the TTS synthesis request, searching a first cache 102 of the server 100 for a target audio file corresponding to the TTS synthesis request;
step S30, searching a second cache 104 of the server 100 for the target audio file corresponding to the TTS synthesis request when the target audio file is not present in the first cache 102; and
step S40, synthesizing the target audio file online using a third party service when the target audio file is not present in the second cache 104.

The computer readable storage medium may be located in the vehicle or may be located in a cloud server. The vehicle can communicate with the cloud server to obtain a corresponding program. It can be understood that the computer program include computer program codes. The computer program codes may be in the form of source codes, object codes, an executable file or some intermediate form, or the like. The computer-readable storage medium may include any entity or device capable of carrying computer program codes, a recording medium, a U disk, a removable hard disk, a magnetic disk, an optical disk, a computer memory, a Read-Only Memory (ROM), a Random-Access Memory (RAM), a software distribution medium, and the like.

The computer-readable storage medium may be any device that can contain, store, communicate, propagate, or transmit a program for use by an instruction execution system, apparatus, or device or in connection with the instruction execution system, apparatus, or device. More specific examples (a non-exhaustive list) of the computer-readable storage medium may include: an electrical connection (an electronic device) having one or more wires, a portable computer diskette (a magnetic device), a random access memory (RAM), a Read-Only Memory (ROM), an Erasable Programmable Read-Only Memory (EPROM or Flash memory), a fiber optic device, and a portable compact disc read-only memory (CDROM). In addition, the computer-readable storage medium could even be paper or other suitable medium upon which a program is printed, as the program can be electronically obtained, for example, by optical scanning of the paper or other medium, then compiled, interpreted or otherwise processed in a suitable manner if necessary, and then stored in a computer memory.

It will be appreciated that the above discussion of the embodiments and the benefits of the voice interaction method also applies to the server 100, the voice interaction system 300, and the computer-readable storage medium of the present invention, which will not be expanded in detail herein to avoid redundancy.

In the description herein, specific features, structures, materials, or characteristics described in connection with terms such as "an embodiment," "some embodiments," an example," "a specific example," or "some examples," etc. are intended to be comprised in at least one embodiment or example of the present invention. In this specification, references to the above terms are not necessarily intended to refer to the same embodiment or example. Furthermore, the specific features, structures, materials, or characteristics described may be combined in any suitable manner in any one or more embodiments or examples. In addition, a skilled person can appreciate that the various embodiments, examples, and features of the embodiments and examples described herein may be combined with each other, except to the extent that they might be mutually exclusive.

Additionally, the terms "first", "second" and the like are used for illustration purposes only, and are not to be construed as indicating or implying relative importance or implying the number of technical features following these terms. Accordingly, a feature following a term like "first" or "second" may comprise at least one of such features either explicitly or implicitly. In the description herein, unless specifically indicated, the term "a plurality of" or "multiple" means at least two, for example, two or three.

Any process or method operations in the flowcharts or otherwise described herein may be understood as representing modules, segments, or portions of codes which include one or more executable instructions for implementing specific logical functions or steps of the processes. Moreover, it will be appreciated by those skilled in the art that the scope of the preferred embodiments of the present invention includes additional embodiments, in which functions may be performed out of order from that illustrated or discussed herein, but may instead be performed in substantially the same way or in reverse order depending on the functionality involved.

While embodiments of the present invention have been illustrated and described above, it will be appreciated that the embodiments described above are illustrative and that the scope of the invention is defined only by the appended claims.

## Claims

1. A voice interaction method, applicable to a server, **characterized by**:
acquiring a Text To Speech, TTS, synthesis request;
based on the TTS synthesis request, searching a first cache of the server for a target audio file corresponding to the TTS synthesis request;
searching a second cache of the server for the target audio file corresponding to the TTS synthesis request when the target audio file is not present in the first cache;
synthesizing the target audio file using a third party service when the target audio file is not present in the second cache; and
returning the target audio file to a vehicle terminal for playback as a response to the TTS synthesis request,
wherein the second cache is updated by:
acquiring inventory data, wherein said inventory data is obtained by the server based on text content of each TTS synthesis request acquired within a specified period of time and the number of occurrences of each TTS synthesis request; and
pre-synthesizing audio streams using the third party service based on the inventory data, and storing the audio streams to the second cache to obtain preset audio file data for the second cache, and
the method further comprises updating the target audio file using the third party service when the target audio file is found in the second cache.

2. The voice interaction method of claim 1, wherein the first cache is updated by:
acquiring the inventory data; and
pre-synthesizing audio streams using the third party service based on the inventory data, and storing the audio streams to the first cache to obtain preset audio file data for the first cache.

3. The voice interaction method of claim 1 or 2, wherein said inventory data is acquired in advance by way of simulation or statistics based on habits of users of the server.

4. The voice interaction method of claim 1 or 2, wherein the first cache and the second cache are updated based on habits of the users.

5. The voice interaction method of claim 3, wherein default settings of the first cache and the second cache are made based on the inventory data.

6. The voice interaction method of claim 1, further comprising:
storing the target audio file synthesized by the third party service online into the first cache when the target audio file is not present in the first cache; and/or
storing the target audio file synthesized by the third party service online into the second cache when the target audio file is not present in the second cache.

7. The voice interaction method of claim 1 or 2, further comprising:
controlling, by a switch, whether or not an audio file is to be stored into the first cache and/or the second cache.

8. The voice interaction method of claim 1 or 2, further comprising:
searching for a TTS synthesis request containing a preset keyword in the inventory data, synthesizing an audio stream corresponding to a found TTS synthesis request using the third party service, and storing the audio stream into the first cache to update the preset audio file data of the first cache; and/or
searching for a TTS synthesis request containing a preset keyword in the inventory data, synthesizing an audio stream corresponding to a found TTS synthesis request using the third party service, and storing the audio stream into the second cache to update the preset audio file data of the second cache.

9. The voice interaction method of claim 1, further comprising:
executing cache eviction for audio files when the first cache meets a preset condition, wherein the preset condition includes:
the audio files have been stored in the first cache for a specific time period, and/or
the audio files stored in the first cache have reached a specific volume.

10. The voice interaction method of claim 6, wherein the execution of the cache eviction policy comprises:
executing cache eviction for the audio files based on the Least Recently Used principle and

11. A server, **characterized in that** the server comprises a first cache and a second cache and is configured to:
acquire a Text To Speech, TTS, synthesis request;
based on the TTS synthesis request, search the first cache for a target audio file corresponding to the TTS synthesis request;
search the second cache for the target audio file corresponding to the TTS synthesis request when the target audio file is not present in the first cache;
synthesize the target audio file using a third party service when the target audio file is not present in the second cache;
return the target audio file to a vehicle terminal for playback as a response to the TTS synthesis request,
wherein the server is further configured to update the second cache by:
acquiring inventory data, wherein said inventory data is obtained by the server based on text content of each TTS synthesis request acquired within a specified period of time and the number of occurrences of each TTS synthesis request; and
pre-synthesizing audio streams using the third party service based on the inventory data, and storing the audio streams to the second cache to obtain preset audio file data for the second cache, and
the server is further configured to update the target audio file using the third party service when the target audio file is found in the second cache.

12. A voice interaction system, **characterized in that** the voice interaction system comprises a vehicle terminal and a server, wherein:
the vehicle terminal is configured to acquire a Text To Speech, TTS, synthesis request based on a voice command and transmit the TTS synthesis request to the server; and
the server is configured to:
acquire the TTS synthesis request;
based on the TTS synthesis request, search the first cache for a target audio file corresponding to the TTS synthesis request,
search the second cache for the target audio file corresponding to the TTS synthesis request when the target audio file is not present in the first cache,
synthesize the target audio file using a third party service when the target audio file is not present in the second cache,
return the target audio file to the vehicle terminal to accomplish voice interaction,
wherein the server is further configured to update the second cache by:
acquiring inventory data, wherein said inventory data is obtained by the server based on text content of each TTS synthesis request acquired within a specified period of time and the number of occurrences of each TTS synthesis request; and
pre-synthesizing audio streams using the third party service based on the inventory data, and storing the audio streams to the second cache to obtain preset audio file data for the second cache, and
the server is further configured to update the target audio file using the third party service when the target audio file is found in the second cache.

13. A computer-readable storage medium having stored thereon a computer program which, when executed by a processor, implements the voice interaction method of any one of claims 1-10.

## Patentansprüche

1. Sprachinteraktionsverfahren, das auf einen Server anwendbar ist, **gekennzeichnet durch**:
Erfassen einer TTS-(Text-To-Speech)-Syntheseanforderung;
Durchsuchen, auf der Basis der TTS-Syntheseanforderung, eines ersten Cache des Servers nach einer Ziel-Audiodatei, die der TTS-Syntheseanforderung entspricht;
Durchsuchen eines zweiten Cache des Servers nach der Ziel-Audiodatei, die der TTS-Syntheseanforderung entspricht, wenn die Ziel-Audiodatei nicht im ersten Cache vorhanden ist;
Synthetisieren der Ziel-Audiodatei mittels eines Drittanbieterdienstes, wenn die Ziel-Audiodatei nicht im zweiten Cache vorhanden ist; und
Zurückgeben der Ziel-Audidatei an ein Fahrzeugterminal zur Wiedergabe als Reaktion auf die TTS-Syntheseanforderung,
wobei der zweite Cache aktualisiert wird **durch**:
Erfassen von Inventardaten, wobei die genannten Inventardaten vom Server auf der Basis von Textinhalt jeder innerhalb eines bestimmten Zeitraums erfassten TTS-Syntheseanforderung und der Anzahl von Auftretensfällen jeder TTS-Syntheseanforderung erhalten werden; und
Vorsynthetisieren von Audiostreams mittels des Drittanbieterdienstes auf der Basis der Inventardaten und Speichern der Audiostreams im zweiten Cache, um voreingestellte Audiodateidaten für den zweiten Cache zu erhalten,
wobei das Verfahren ferner das Aktualisieren der Ziel-Audiodatei mittels des Drittanbieterdienstes beinhaltet, wenn die Ziel-Audiodatei im zweiten Cache gefunden wird.

2. Sprachinteraktionsverfahren nach Anspruch 1, wobei der erste Cache aktualisiert wird durch:
Erfassen der Inventardaten; und
Vorsynthetisieren von Audiostreams mittels des Drittanbieterdienstes auf der Basis der Inventardaten und Speichern der Audiostreams im ersten Cache, um voreingestellte Audiodateidaten für den ersten Cache zu erhalten.

3. Sprachinteraktionsverfahren nach Anspruch 1 oder 2, wobei die genannten Inventardaten im Voraus durch Simulation oder Statistik auf der Basis von Gewohnheiten von Benutzern des Servers erfasst werden.

4. Sprachinteraktionsverfahren nach Anspruch 1 oder 2, wobei der erste Cache und der zweite Cache auf der Basis von Gewohnheiten der Benutzer aktualisiert werden.

5. Sprachinteraktionsverfahren nach Anspruch 3, wobei Standardeinstellungen des ersten Cache und des zweiten Cache auf der Basis der Inventardaten vorgenommen werden.

6. Sprachinteraktionsverfahren nach Anspruch 1, das ferner Folgendes beinhaltet:
Speichern der vom Drittanbieter synthetisierten Ziel-Audiodatei online im ersten Cache, wenn die Ziel-Audiodatei nicht im ersten Cache vorhanden ist; und/oder
Speichern der vom Drittanbieterdienst synthetisierten Ziel-Audiodatei online im zweiten Cache, wenn die Ziel-Audiodatei nicht im zweiten Cache vorhanden ist.

7. Sprachinteraktionsverfahren nach Anspruch 1 oder 2, das ferner Folgendes beinhaltet:
Steuern, mittels eines Schalters, ob eine Audiodatei im ersten Cache und/oder im zweiten Cache gespeichert werden soll.

8. Sprachinteraktionsverfahren nach Anspruch 1 oder 2, das ferner Folgendes beinhaltet:
Suchen nach einer ein voreingestelltes Schlüsselwort enthaltenden TTS-Syntheseanforderung in den Inventardaten, Synthetisieren eines Audiostreams entsprechend einer gefundenen TTS-Syntheseanforderung mittels des Drittanbieterdienstes, und Speichern des Audiostreams im ersten Cache, um die voreingestellten Audiodateidaten des ersten Cache zu aktualisieren; und/oder
Suchen nach einer ein voreingestelltes Schlüsselwort enthaltenden TTS-Syntheseanforderung in den Inventardaten, Synthetisieren eines Audiostreams entsprechend einer gefundenen TTS-Syntheseanforderung mittels des Drittanbieterdienstes und Speichern des Audiostreams im zweiten Cache, um die voreingestellten Audiodateidaten des zweiten Cache zu aktualisieren.

9. Sprachinteraktionsverfahren nach Anspruch 1, das ferner Folgendes beinhaltet:
Ausführen von Cache-Bereinigung für Audiodateien, wenn der erste Cache eine voreingestellte Bedingung erfüllt, wobei die voreingestellte Bedingung Folgendes beinhaltet:
die Audiodateien wurden für einen bestimmten Zeitraum im ersten Cache gespeichert und/oder
die im ersten Cache gespeicherten Audiodateien haben ein bestimmtes Volumen erreicht.

10. Sprachinteraktionsverfahren nach Anspruch 6, wobei die Ausführung der Cache-Bereinigungsrichtlinie Folgendes beinhaltet:
Ausführen von Cache-Bereinigung für die Audiodateien auf der Basis des "Least Recently Used" (am längsten nicht verwendet) Prinzips und einer voreingestellten Ablaufzeit.

11. Server, **dadurch gekennzeichnet, dass** der Server einen ersten Cache und einen zweiten Cache umfasst und konfiguriert ist zum:
Erfassen einer TTS-(Text-To-Speech)-Syntheseanforderung;
Durchsuchen, auf der Basis der TTS-Syntheseanforderung, des ersten Cache des Servers nach einer Ziel-Audiodatei, die der TTS-Syntheseanforderung entspricht;
Durchsuchen des zweiten Cache nach der Ziel-Audiodatei, die der TTS-Syntheseanforderung entspricht, wenn die Ziel-Audiodatei nicht im ersten Cache vorhanden ist;
Synthetisieren der Ziel-Audiodatei mittels eines Drittanbieterdienstes, wenn die Ziel-Audiodatei nicht im zweiten Cache vorhanden ist; und
Zurückgeben der Ziel-Audidatei an ein Fahrzeugterminal zur Wiedergabe als Reaktion auf die TTS-Syntheseanforderung,
wobei der Server ferner konfiguriert ist zum Aktualisieren des zweiten Cache durch:
Erfassen von Inventardaten, wobei die genannten Inventardaten vom Server auf der Basis von Textinhalt jeder innerhalb eines bestimmten Zeitraums erfassten TTS-Syntheseanforderung und der Anzahl von Auftretensfällen jeder TTS-Syntheseanforderung erhalten werden; und
Vorsynthetisieren von Audiostreams mittels des Drittanbieterdienstes auf der Basis der Inventardaten und Speichern der Audiostreams im zweiten Cache, um voreingestellte Audiodateidaten für den zweiten Cache zu erhalten, und
wobei der Server ferner konfiguriert ist zum Aktualisieren der Ziel-Audiodatei mittels des Drittanbieterdienstes, wenn die Ziel-Audiodatei im zweiten Cache gefunden wird.

12. Sprachinteraktionssystem, **dadurch gekennzeichnet, dass** das Sprachinteraktionssystem ein Fahrzeugterminal und einen Server umfasst, wobei:
das Fahrzeugterminal zum Erfassen einer TTS-(Text-To-Speech)-Syntheseanforderung auf der Basis eines Sprachbefehls und zum Übertragen der TTS-Syntheseanforderung zum Server konfiguriert ist; und
der Server konfiguriert ist zum:
Erfassen der TTS-Syntheseanforderung;
Durchsuchen, auf der Basis der TTS-Syntheseanforderung, des ersten Cache nach einer Ziel-Audiodatei, die der TTS-Syntheseanforderung entspricht;
Durchsuchen des zweiten Cache nach der Ziel-Audiodatei, die der TTS-Syntheseanforderung entspricht, wenn die Ziel-Audiodatei nicht im ersten Cache vorhanden ist;
Synthetisieren der Ziel-Audiodatei mittels eines Drittanbieterdienstes, wenn die Ziel-Audiodatei nicht im zweiten Cache vorhanden ist; und
Zurückgeben der Ziel-Audidatei an das Fahrzeugterminal zur Durchführung von Sprachinteraktion,
wobei der Server ferner konfiguriert ist zum Aktualisieren des zweiten Cache durch:
Erfassen von Inventardaten, wobei die genannten Inventardaten vom Server auf der Basis von Textinhalt jeder innerhalb eines bestimmten Zeitraums erfassten TTS-Syntheseanforderung und der Anzahl von Auftretensfällen jeder TTS-Syntheseanforderung erhalten werden; und
Vorsynthetisieren von Audiostreams mittels des Drittanbieterdienstes auf der Basis der Inventardaten und Speichern der Audiostreams im zweiten Cache, um voreingestellte Audiodateidaten für den zweiten Cache zu erhalten,
wobei der Server ferner konfiguriert ist zum Aktualisieren der Ziel-Audiodatei mittels des Drittanbieterdienstes, wenn die Ziel-Audiodatei im zweiten Cache gefunden wird.

13. Computerlesbares Speichermedium, auf dem ein Computerprogramm gespeichert ist, das bei Ausführung durch einen Prozessor das Sprachinteraktionsverfahren nach einem der Ansprüche 1 bis 10 implementiert.

## Revendications

1. Procédé d'interaction vocale, applicable à un serveur, **caractérisé par** :
une acquisition d'une demande de synthèse de la parole à partir du texte, TTS ;
sur la base de la demande de synthèse TTS, une recherche dans une première mémoire cache du serveur d'un fichier audio cible correspondant à la demande de synthèse TTS ;
une recherche dans une seconde mémoire cache du serveur du fichier audio cible correspondant à la demande de synthèse TTS lorsque le fichier audio cible n'est pas présent dans la première mémoire cache ;
une synthèse du fichier audio cible à l'aide d'un service tiers lorsque le fichier audio cible n'est pas présent dans la seconde mémoire cache ; et
un renvoi du fichier audio cible à un terminal de véhicule pour une lecture en réponse à la demande de synthèse TTS,
dans lequel la seconde mémoire cache est mise à jour par :
acquisition de données d'inventaire, dans lequel lesdites données d'inventaire sont obtenues par le serveur sur la base d'un contenu textuel de chaque demande de synthèse TTS acquise au sein d'une période de temps spécifiée et du nombre d'occurrences de chaque demande de synthèse TTS ; et
synthèse préalable de flux audio à l'aide du service tiers sur la base des données d'inventaire, et stockage des flux audio sur la seconde mémoire cache pour obtenir des données de fichier audio prédéfinies pour la seconde mémoire cache, et
le procédé comprend en outre une mise à jour du fichier audio cible à l'aide du service tiers lorsque le fichier audio cible est trouvé dans la seconde mémoire cache.

2. Procédé d'interaction vocale selon la revendication 1, dans lequel la première mémoire cache est mise à jour par :
acquisition des données d'inventaire ; et
synthèse préalable de flux audio à l'aide du service tiers sur la base des données d'inventaire, et stockage des flux audio sur la première mémoire cache pour obtenir des données de fichier audio prédéfinies pour la première mémoire cache.

3. Procédé d'interaction vocale selon la revendication 1 ou 2, dans lequel lesdites données d'inventaire sont acquises à l'avance au moyen d'une simulation ou de statistiques sur la base d'habitudes d'utilisateurs du serveur.

4. Procédé d'interaction vocale selon la revendication 1 ou 2, dans lequel la première mémoire cache et la seconde mémoire cache sont mises à jour sur la base d'habitudes des utilisateurs.

5. Procédé d'interaction vocale selon la revendication 3, dans lequel des réglages par défaut de la première mémoire cache et de la seconde mémoire cache sont réalisés sur la base des données d'inventaire.

6. Procédé d'interaction vocale selon la revendication 1, comprenant en outre :
un stockage du fichier audio cible synthétisé par le service tiers en ligne dans la première mémoire cache lorsque le fichier audio cible n'est pas présent dans la première mémoire cache ; et/ou
un stockage du fichier audio cible synthétisé par le service tiers en ligne dans la seconde mémoire cache lorsque le fichier audio cible n'est pas présent dans la seconde mémoire cache.

7. Procédé d'interaction vocale selon la revendication 1 ou 2, comprenant en outre :
une commande, par un commutateur, du fait qu'un fichier audio doit être stocké ou non dans la première mémoire cache et/ou dans la seconde mémoire cache.

8. Procédé d'interaction vocale selon la revendication 1 ou 2, comprenant en outre :
une recherche d'une demande de synthèse TTS contenant un mot clé prédéfini dans les données d'inventaire, une synthèse d'un flux audio correspondant à une demande de synthèse TTS trouvée à l'aide du service tiers, et un stockage du flux audio dans la première mémoire cache pour mettre à jour les données de fichier audio prédéfinies de la première mémoire cache ; et/ou
une recherche d'une demande de synthèse TTS contenant un mot clé prédéfini dans les données d'inventaire, une synthèse d'un flux audio correspondant à une demande de synthèse TTS trouvée à l'aide du service tiers, et un stockage du flux audio dans la seconde mémoire cache pour mettre à jour les données de fichier audio prédéfinies de la seconde mémoire cache.

9. Procédé d'interaction vocale selon la revendication 1, comprenant en outre :
une exécution d'une expulsion de mémoire cache pour des fichiers audio lorsque la première mémoire cache satisfait une condition prédéfinie, dans lequel la condition prédéfinie comprend :
les fichiers audio ont été stockés dans la première mémoire cache pour une période de temps spécifique, et/ou
les fichiers audio stockés dans la première mémoire cache ont atteint un volume spécifique.

10. Procédé d'interaction vocale selon la revendication 6, dans lequel l'exécution de la politique d'expulsion de mémoire cache comprend :
une exécution d'une expulsion de mémoire cache pour les fichiers audio sur la base du principe de l'élément utilisé le moins récemment et d'un temps d'expiration prédéfini.

11. Serveur, **caractérisé en ce que** le serveur comprend une première mémoire cache et une seconde mémoire cache et est configuré pour :
acquérir une demande de synthèse de la parole à partir du texte, TTS ;
sur la base de la demande de synthèse TTS, rechercher dans la première mémoire cache un fichier audio cible correspondant à la demande de synthèse TTS ;
rechercher dans la seconde mémoire cache le fichier audio cible correspondant à la demande de synthèse TTS lorsque le fichier audio cible n'est pas présent dans la première mémoire cache ;
synthétiser le fichier audio cible à l'aide d'un service tiers lorsque le fichier audio cible n'est pas présent dans la seconde mémoire cache ; et
renvoyer le fichier audio cible à un terminal de véhicule pour une lecture en réponse à la demande de synthèse TTS,
dans lequel le serveur est en outre configuré pour mettre à jour la seconde mémoire cache par :
acquisition de données d'inventaire, dans lequel lesdites données d'inventaire sont obtenues par le serveur sur la base d'un contenu textuel de chaque demande de synthèse TTS acquise au sein d'une période de temps spécifiée et du nombre d'occurrences de chaque demande de synthèse TTS ; et
synthèse préalable de flux audio à l'aide du service tiers sur la base des données d'inventaire, et stockage des flux audio sur la seconde mémoire cache pour obtenir des données de fichier audio prédéfinies pour la seconde mémoire cache, et
le serveur est en outre configuré pour mettre à jour le fichier audio cible à l'aide du service tiers lorsque le fichier audio cible est trouvé dans la seconde mémoire cache.

12. Système d'interaction vocale, **caractérisé en ce que** le système d'interaction vocale comprend un terminal de véhicule et un serveur, dans lequel :
le terminal de véhicule est configuré pour acquérir une demande de synthèse de la parole à partir du texte, TTS, sur la base d'une commande vocale et transmettre la demande de synthèse TTS au serveur ; et
le serveur est configuré pour :
acquérir la demande de synthèse TTS ;
sur la base de la demande de synthèse TTS, rechercher dans la première mémoire cache un fichier audio cible correspondant à la demande de synthèse TTS,
rechercher dans la seconde mémoire cache le fichier audio cible correspondant à la demande de synthèse TTS lorsque le fichier audio cible n'est pas présent dans la première mémoire cache,
synthétiser le fichier audio cible à l'aide d'un service tiers lorsque le fichier audio cible n'est pas présent dans la seconde mémoire cache,
renvoyer le fichier audio cible au terminal de véhicule pour accomplir une interaction vocale, dans lequel le serveur est en outre configuré pour mettre à jour la seconde mémoire cache par :
acquisition de données d'inventaire, dans lequel lesdites données d'inventaire sont obtenues par le serveur sur la base d'un contenu textuel de chaque demande de synthèse TTS acquise au sein d'une période de temps spécifiée et du nombre d'occurrences de chaque demande de synthèse TTS ; et
synthèse préalable de flux audio à l'aide du service tiers sur la base des données d'inventaire, et stockage des flux audio sur la seconde mémoire cache pour obtenir des données de fichier audio prédéfinies pour la seconde mémoire cache, et
le serveur est en outre configuré pour mettre à jour le fichier audio cible à l'aide du service tiers lorsque le fichier audio cible est trouvé dans la seconde mémoire cache.

13. Support de stockage lisible par ordinateur ayant stocké dessus un programme d'ordinateur qui, lorsqu'il est exécuté par un processeur, met en œuvre le procédé d'interaction vocale selon l'une quelconque des revendications 1 à 10.
